# EUROPEAN PATENT APPLICATION

(11) **EP 3 179 431 A1**
(43) Date of publication of application: **14.06.2017**
(21) Application number: 15199658.4
(22) Date of filing: 11.12.2015
(51) Int. Cl.: G06Q 20/40, G06F 21/32

(54) **USER AUTHENTICATION FOR TRANSACTIONS**

(71) Applicant: Mastercard International Incorporated, Purchase NY 10577 (US)
(72) Inventor: MADDOCKS, Ian, Broughton, MK10 9NY (GB); ROBERTS, David, Warrington, WA4 5RD (GB)
(74) Representative: Lawrence, Richard Anthony

(57) **Abstract**

A method of authentication of a user at a computing device (1) is provided suitable for a transaction or for use of a remote service. A plurality of authentication options is provided to the user at the computing device (1). On selection of an authentication option by the user, an authentication protocol is performed for the selected authentication option. On successful performance of the authentication protocol, the computing device communicates with the remote service to provide a confirmation of successful authentication for the remote service with an identification of which of the plurality of authentication options was selected by the user. This approach can be used to enable transactions by a delegated user, and in fraud detection and prevention. Suitable computing devices and service offerings are also described.

## Description

### Field of Invention

This invention relates generally to user identification for transactions. Embodiments relate to authentication of a user on a payment device, with particular embodiments relating to use of user authentication information for fraud prevention.

### Background of Invention

Payment cards such as credit cards and debit cards are very widely used for all forms of financial transaction. The use of payment cards has evolved significantly with technological developments over recent years. Many payments are made at a retail location, typically with a physical payment card interacting with a point of sale (POS) terminal to support a transaction authorization. These payment cards may interact with a POS by swiping through a magnetic stripe reader, or for a "chip card" or "smart card" by direct contact with a smart card reader (under standard ISO/IEC 7816) or by contactless interaction through local short range wireless communication (under standard ISO/IEC 14443). To ensure the account holder is requesting the payment the use of cardholder verification is used, where the user is authenticated typically by a personal identification number (PIN) entered into the POS or a mobile payment device. Signature was an earlier authentication paradigm, and is now generally used only when PIN is not available for use. For other purposes, a number of other authentication paradigms are used: fingerprints, facial recognition, voice recognition and gesture are all used to some degree, as are other biometric and other identifiers. Several of these authentication approaches can be used to authenticate through a user computing device such as a user mobile phone.

Given the variety of user authentication options, it would be desirable to make a richer use of user authentication data, particularly for user authentication at user mobile devices.

### Summary of Invention

In a first aspect, the invention provides a method of authentication of a user at a computing device for a remote service, comprising at the computing device: providing a plurality of authentication options to the user; on selection of an authentication option by the user, performing an authentication protocol for the selected authentication option; and on successful performance of the authentication protocol, communicating with the remote service to provide a confirmation of successful authentication for the remote service with an identification of which of the plurality of authentication options was selected by the user.

In embodiments, the computing device is a wireless telecommunications handset.

The authentication options may comprise at least one biometric identifier. The authentication options may comprise at least one authentication option for a delegated user.

The computing device may be a payment device. In this case, the remote service may comprise an issuer authentication service for the payment device. Such a payment device may use an EMV protocol, in which case the authentication option selected may be communicated in Issuer Application Data. In such an embodiment, the authentication option selected may be overloaded within the PIN Try Counter, maintaining continuity of existing data elements and sizes, or add the information to the Card Verification Results data element as sub-element of Issuer Application Data.

In a second aspect, the invention provides a computing device having a processor and a memory and programmed to perform the method described above, and having a user interface for a user to provide one or more authentication options.

In a third aspect, the invention provides a method of fraud detection comprising: providing multiple authentication options for a user of a device or service; tracking use of the separate authentication options for that user to establish an authentication pattern for that user; and identifying a use of an authentication option as potentially fraudulent if the use does not match the authentication pattern.

### Brief Description of Figures

Embodiments of the invention will now be described, by way of example, with reference to the accompanying Figures, of which:
Figure 1 shows an exemplary transaction system in which embodiments of the invention may be used;
Figure 2a and Figure 2b show respectively elements of a mobile device and an issuing bank application server for use in embodiments of the invention;
Figure 3 shows a method of authenticating a mobile device according to an aspect of the invention;
Figure 4 illustrates a use model for a delegated transaction used in an embodiment of the invention;
Figure 5 illustrates a process flow according to an embodiment of the invention to implement the user model of Figure 4; and
Figure 6 illustrates a process flow for a fraud detection process using user authentication type information provided in accordance with embodiments of the

### invention.

### Description of Specific Embodiments

Specific embodiments of the invention will be described below with reference to the Figures.

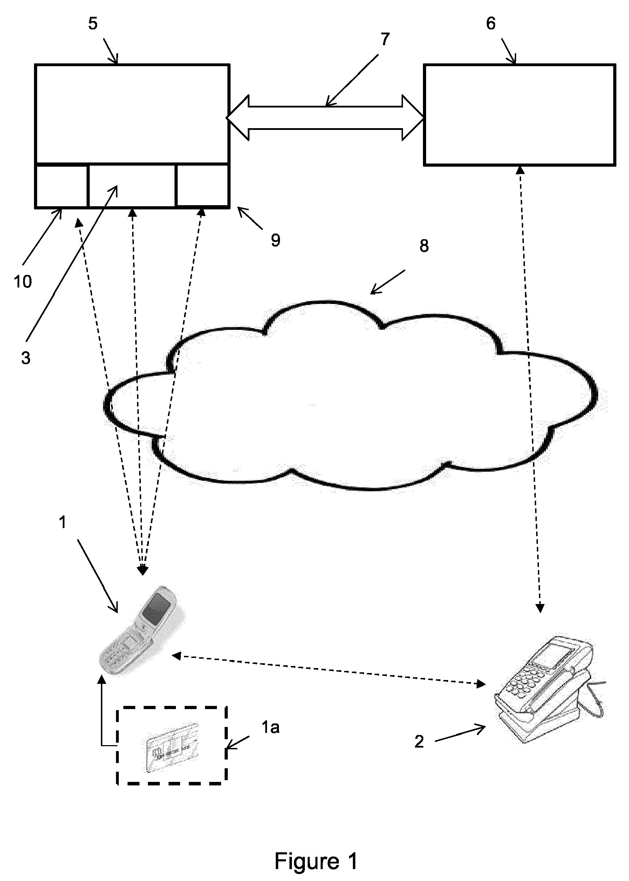

Figure 1 shows an exemplary transaction system in which embodiments of the invention may be used.

A user (not shown) is provided with a payment device - this may be a user computing device such as a mobile phone 1 or a notebook computer or a tablet. This may act as a proxy for a payment card or portable consumer device such as smart watch, wristband, ring, vehicle key fob or other devices those practiced in the art would classify as a wearable 1 a and can also act as a payment management device 1 to allow the user to manage payments on their account

These devices typically have processors and memories for storing information including firmware and applications run by the respective processors. Payment devices will typically be equipped with means to communicate with other elements of a payment infrastructure. These communication means may comprise antennae and associated hardware and software to enable communication by means of the ISO/IEC7816 chip interface or may comprise contactless card protocols such as those defined under ISO/IEC 14443 and EMVCo Book D, or they may comprise an antenna and associated hardware and software to allow local wireless networking using 802.11 protocols or any combination of the above.

Other computer equipment in a conventional infrastructure is typically fixed, but in cases of interest point of interaction (POI) terminals 2 may also be portable. The example shown is a mobile point-of-sale (MPOS) terminal used by a merchant interacting with the user. Such equipment is typically connected or connectable to an acquiring bank 6 or other system in a secure way (either through a dedicated channel or through a secure communication mechanism over a public or insecure channel - here connection is shown as passing through the public internet 8). There is also shown a mechanism to allow connection between the payment management device 1 and a card issuing bank 5 or system associated with the user. A banking infrastructure 7 will also connect the card issuer 5 and the acquiring bank 6, allowing transactions to be carried out between them.

An issuing bank application server 3 is shown explicitly as part of the issuing bank 5. While indicated here as a single computing system (comprising processor, memory, communications and any other relevant element of such a system), the issuing bank application server 3 may be provided as elements of a common computing system with other elements of the issuing bank, may be comprised physically or logically separated elements, or may even be implemented wholly or partly as services provide by a trusted third party provider (such as the provider of the banking infrastructure). Two functional elements provided by the issuing bank 5 through the issuing bank application server 3 are shown in more detail. These are an issuer authentication module 9 and an issuer customer server 10. The issuer authentication module 9 is shown as connecting directly to the payment management device 1 (as may be the case in some use contexts), though in many cases the issuer authentication module will be accessed through the banking infrastructure 7 to authenticate a user to validate a transaction. The issuer customer server 10 is also shown as connecting to the payment management device 1, though a user may connect to the issuer customer server 10 using any suitable computing device. In embodiments, a user uses the issuer customer server 10 to set permissions relating to use of a user account.

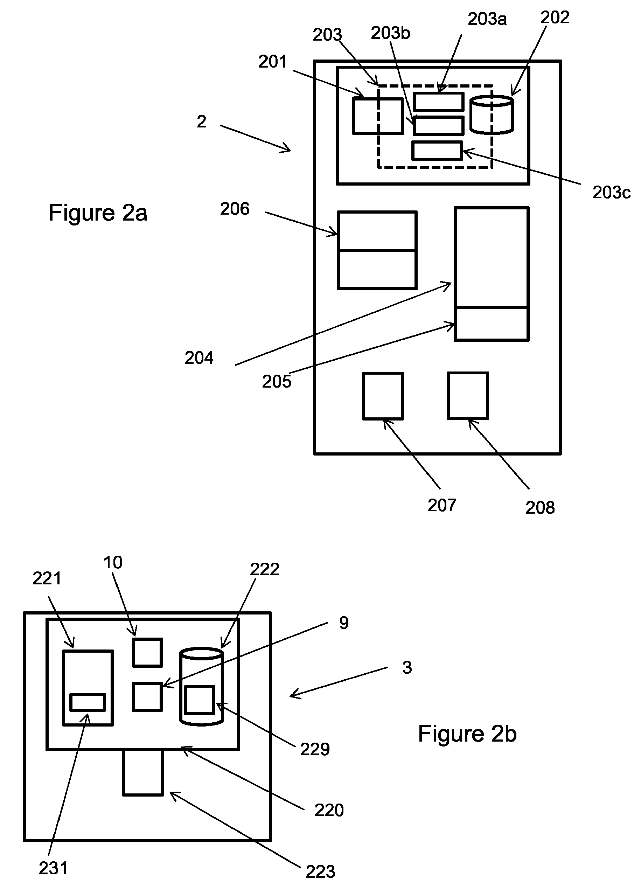

Figures 2a and 2b illustrate schematically relevant functions of a user payment management device 1 and an issuer system comprising an issuer authentication module 9 and an issuer customer server 10.

Figure 2a shows a payment management device 1, may be a mobile handset though it should be noted that any other portable computing apparatus such as a laptop, notebook or tablet computer, or even a fixed apparatus such as a desktop computer, can be used as computing apparatus in embodiments of the invention. The payment management device comprises a processor 201 and a memory 202, such that the memory stores and the processor will subsequently run applications (shown generally as residing in an application space 203) such as a payment management application 203a, a fingerprint scanning application 203b and a voice recognition application 203c - fingerprint scanning application 203b and voice recognition 203c are exemplary of biometric applications that may be used for authentication of a user to supplement or replace other authentication mechanisms (such as a password within an application), with other biometric alternatives (such as face and gesture recognition) also available for use. The payment management device has a user interface comprising a display 204 and a touchscreen 205 (or other input device) and associated drivers to allow a user to enter data into and view information from the applications 203. The payment management device 1 also has a communications capability, such as a subscriber information module 206 and wireless communication element 207 together providing the ability to connect to a cellular communications network, in addition or alternatively the payment management device 1 may include wifi or wired network access. The payment management device 1 may need to perform cryptographic operations in order to interact securely with bank application server 3.

Figure 2c describes elements of the payment card 1 a may need to perform cryptographic operations in order to interact securely with a POS terminal or to support specific authentication methods - this may be achieved by a cryptographic capability such as a secure processing environment 209 in a tamper protected element - this secure processing environment, which may comprise a cryptographic processor and a secure region of memory, may also hold secrets for use by applications in the main application space 203, or parts of these applications may run within the secure processing environment 209.

Figure 2b describes elements of the issuing bank application server 3. This is shown as comprising a processing environment 220 with processor 221 and memory 222, with associated communications functionality 223. The communications functionality may include networking capability allowing communication with the payment network infrastructure 7, there will be a telecommunications capability allowing communication over a public network with the payment management device 1 that will be secured. The processor 221 is a representation of processing capability and may in practice be provided by several processors. Other features, such as a user database, are not shown explicitly here as they may be implemented by conventional means and do not need to be discussed further to explain the elements of the present disclosure. The issuer authentication module 9 is shown as an element within the processing environment 220, with associated user authentication data 229 stored in the memory 222. The issuer customer server 10 is also shown as an element within the processing environment 220. Elements shown within the processing environment 220 use the processor 221 and the memory 222 to deliver functionality - in the case of the issuer authentication module 9, this is for the issuer 5 to provide confirmation to the banking infrastructure 7 and ultimately the acquiring bank 6 that a legitimate cardholder is involved in a transaction, whereas in the case of the issuer customer server, this is for the cardholding customer of the issuing bank 5. In embodiments, a cryptographic processor 231 may be used to enable secure communication between the issuing bank application server 3 and the payment management device 1.

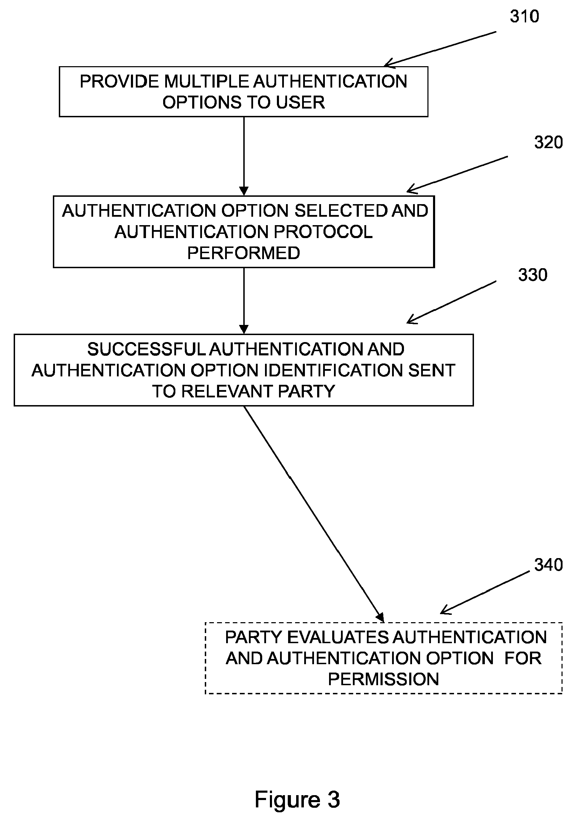

Figure 3 shows in general terms a method of authentication at a computing device according to an aspect of the invention. First of all, multiple authentication options that are supported by the payment device 1 or 1 a are made available 310 to the user of the device - as discussed above, these may include the provision of passwords, a biometric identifier such as fingerprint, voice or facial recognition, or any other appropriate mechanism - and on selection an appropriate authentication protocol is performed 320. In most embodiments, the computing device is a mobile device, particularly a mobile phone or a tablet computer, but other embodiments apply to a broader range of portable consumer devices including by proxy a payment card 1a. On successful authentication, indications of both the successful authentication and the selected authentication option are sent 330 to a relevant party - in the case of a transaction for which the mobile device is being used as a payment device, this may be an issuing bank 5 or its issuer authentication module 9.

This approach differs from that used in conventional authentication, notably in that in conventional authentication at a mobile device the authentication type is not recorded and, most particularly, is not transmitted together with the confirmed authentication to any remote party. Preserving and transmitting the authentication type in this way allows a remote party to evaluate 340 not only the authentication but also the authentication option selected when making decisions. As will be discussed below, this is relevant to at least two scenarios: providing permission to a delegate for use of a payment device; and improved fraud detection and prevention.

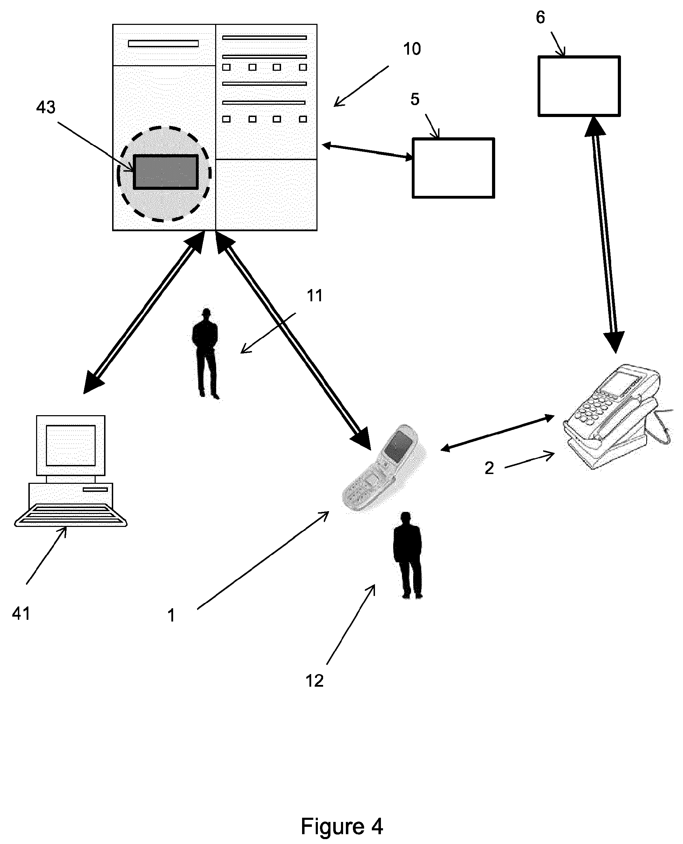

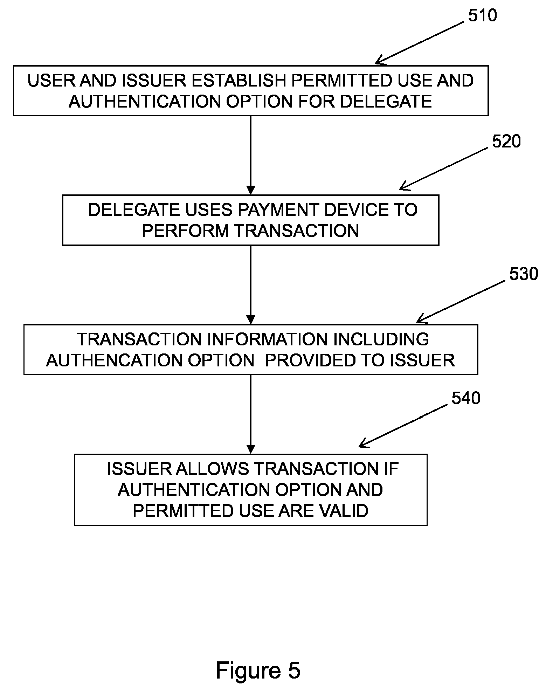

Delegated transactions will now be considered with reference to Figures 4 and 5. Figure 4 illustrates a use model for a delegated transaction used in an embodiment of the invention. A user 40 interacts with an issuer customer server 10 through a mobile device 1 or other computing device 41. The user 40 has identified one or more delegates 42 permitted to access a user account associated with payment card 1 a through a payment device (in this case, mobile device 1) with a specific authentication method (such as a delegate biometric or a delegate-specific password). This is established, along with any limits or controls on use, between the user 40 and the issuer customer server 10 using payment device permission software 43 - this could, for example, be a modified version of the proprietor's In Control software. On use of the mobile device 1 by the delegate 42 as a payment device (shown here as an interaction with terminal 2) using the delegate specific authentication method, transaction details are passed back through the banking infrastructure to the issuing bank 5 (shown separately from, but interacting with, the issuer customer server 10 for convenience), the transaction details including not only an indication of authentication at the mobile device 1 but also an indication of the authentication method (this being sufficient to identify the authentication as a delegate authentication). The issuing bank 5, using the permissions determined through the payment device permission software, can establish not only whether use by the delegate 42 is legitimate but also whether it falls within the permitted use established by the user 40.

Figure 5 illustrates a process flow according to an embodiment of the invention to implement the user model of Figure 4. First of all, the user and the issuer establish 510 permitted use and an authentication option for a delegate. The delegate uses 520 the payment device to perform the transaction, wherein the transaction information and the authentication option used by the delegate are provided 530 to the issuer. The issuer allows 540 the transaction if the transaction falls within the permitted use and the authentication option is valid for the delegate - in some cases this step may take place after the transaction has been completed, in which case other action such as account suspension until direct communication between the issuer and user may take place instead.

Each of the steps set out in Figure 5 will now be described in more detail.

The user and issuer can first establish who is a legitimate delegate, what the permitted use of that delegate is, and an authentication option for that delegate by using appropriate payment device permission software 43 hosted by the issuer customer server 10 with the user interacting through a client on their mobile device 1 or other computing device 41. This payment device permission software 43 may expand upon the functionality of the present applicant's In Control software, though it is not necessary for embodiments of the invention to employ the existing functionality of In Control. The In Control software is similarly hosted on an issuer customer server 10 or otherwise on behalf of the issuer. It currently allows users to set limits on their own usage behaviour beyond the credit limit allowed by the issuer, and can for example be used to control usage behaviour of cardholders in a family or in a work group - in these cases the card "owner" may be different from the card "user", and it is typically the owner, with ultimate responsibility for meeting bills for use of the payment devices, who sets these permissions.

The expansion of functionality allows a user to establish a delegate able to use the payment device (referred to as "card" for convenience in the following discussion). This differs from existing arrangements in which a card owner may have responsibility for multiple payment devices but these have their own separate cardholders - the card owner does not at present have a mechanism to establish a delegate for a card for which the card owner is also the cardholder. Currently this would be considered to be problematic, primarily because of concerns over authentication addressed in embodiments of the present invention. New functionality allows the delegate to be established and an authentication option for that delegate also to be established - delegate permissions can be established for the delegate in the same way as in In Control, allowing monetary and time usage limits, geographical limits, or even limitation for use with particular merchants or for particular transaction types.

Establishment of a delegate should be achieved in a way considered sufficiently secure by both user and delegate. The delegate identity would need to be established in a user session - one possibility would then be for the delegate also to be present in the session and to complete delegate details and a delegate authentication option during the session at which point the user has reasonable visibility of the process. This may be an appropriate option if the delegate is intended to use a physical payment device - such as mobile device 1 - that is also used for the relevant session with the payment device permission software. The mobile device 1 could simply be handed to the delegate to enter delegate details and to establish the delegate authentication option. This could be a password personal to the delegate, or could be a biometric, such as a delegate fingerprint. This would also mean that the secure data associated with the delegate authentication option may not need to be transmitted beyond the mobile device itself, and could be held in a secure area of that device.

Another option to establish delegate details would be for the user to provide enough details for the delegate to allow the delegate to establish his or her own session with the issuer customer server 10. This may for example involve the user providing two delegate credentials with separate communication paths - such as an e-mail address and a mobile phone number - to allow a two-factor interaction in the delegate session in which a delegate authentication option is established. This approach provides a reasonable level of security to the user, the delegate and the issuer.

A further way to establish the delegate authentication would be for the user to load the delegate's authentication password or PIN code on their behalf, and communicate the code directly to the delegate. In embodiments the delegate may be forced to change this authentication credential on the payment management device 1 code before the device can be used for payment.

In embodiments where the payment device is the payment card 1a the payment management device 1 will communicate the delegate authenticate data to the payment card 1 a during the establishment of the authentication 330.

Use of the payment device by the delegate is essentially the same as use by the user - the delegate engages in a transaction in the same way, and when asked to provide authentication, provides the delegate authentication option. From the perspective of the merchant and the acquiring bank, there is no change to existing processes. The transaction details are however modified in a way relevant only to the issuing bank and the banking infrastructure. One suitable way to do this is discussed immediately below.

For a payment device, there may be more than one variety of cardholder verification method (CVM) available. For a physical card interacting with a chip and pin terminal, the standard CVM is online PIN (personal identification number) in which PIN information is entered and sent to the card issuer, whereas for an offline PIN transaction there is no online communication with the issuer but a PIN check by the payment device itself. The main payment device standards are those developed by the industry through EMVCo, which provides specifications at https://www.emvco.com/specifications.aspx. In practice, biometrics, gesture and other authentication approaches may be used at payment devices as part of a user authentication protocol, but these are not differentiated in any recorded transaction information (they will typically be treated as online PIN,offline PIN, or consumer-device cardholder verification (CD-CVM) depending on whether or not there is direct contact with the issuer). There is however specific information from a transaction provided to an issuer under EMVCo protocols - this is known as Issuer Application Data (IAD). The IAD message could be expanded to carry an additional one or two bytes of data representing a CVM type - values could be chosen to indicate not only the type of CVM used but also whether or not the PIN (or equivalent) related to a user or to a delegate. An alternative approach that would not change existing message sizes would be to overload a relevant field, such as the PIN Try Counter that tracks the number of authentication attempts that have been made - this may not require a full byte, particularly as most security protocols will require any authentication approach to abort before a full byte of authentication attempts have been made. This could be done, for example, by the lower nibble of the PIN Try Counter (values x0...xF) retaining their original function but the upper nibble (values 0x...Fx) carrying CVM type (fingerprint, passcode, PIN, gesture, delegate identifier...). This allows the transaction details to be processed in the normal way by the merchant, the acquiring bank and most parts of the banking infrastructure, while allowing the CVM type information to be used by the issuer, the banking infrastructure or another party acting on behalf of the issuer, or in some approaches by the banking infrastructure independently of the issuer.

When the transaction details reach the issuer (specifically issuer authentication module 9), the CVM type information can be used to determine whether the CVM relates to the cardholder or to a delegate (there are other benefits beyond this in recording CVM type, as are discussed further below). The issuer will then determine whether the transaction falls within the permitted activities established for the delegate by the user/cardholder and the issuer. If so, then the transaction can be authorised or rejected accordingly (for an online transaction) or flagged appropriately (if the transaction is offline and complete) preventing further use of the relevant cardholder account until the situation has been regularised.

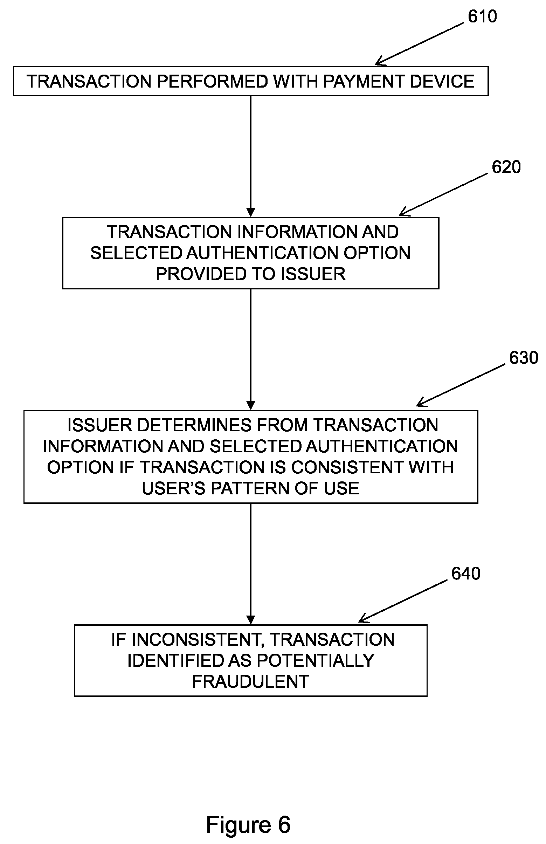

While use by delegates is one benefit of the approach used to authentication options shown in Figure 3, there are other benefits from the availability of this additional authentication information, particularly in fraud prevention. Figure 6 illustrates a process flow for a fraud detection process using user authentication type information provided in accordance with embodiments of the invention.

When a transaction is performed 610 using a payment device according to embodiments of the invention, one authentication option from a plurality of available authentication options is used and the transaction information including the selected authentication option are sent 620 into the payment infrastructure and are provided to a system acting on behalf of the issuer (in embodiments, the issuer authentication module 9) to establish whether the use of the payment device is valid. The issuer (or the banking infrastructure acting for or in addition to the issuer) will then attempt to determine 630 from the transaction details, including the selected authentication option, whether the transaction is so inconsistent with the user's existing pattern of use of the payment device as to be potentially fraudulent (for example, by assigning a risk score to features of the transaction and establishing an overall risk score for the transaction), and if so, then taking action 640 to identify the transaction as potentially fraudulent. As the form of authentication used is - even if unexpected - one that has been established and approved by the issuer, rejection of the transaction may not be appropriate - an alternative may be a call to the cardholder to confirm that the use is a legitimate user.

The additional information provided by the identification of the selected authentication option may significantly affect any risk score. For example, for transactions with his or her mobile phone a user may customarily use a convenient biometric such as a fingerprint - another authorisation option, such as a password, may be available but never normally used for transactions on that payment device. Use of the password for user authentication on the mobile phone would raise significantly the risk that use was fraudulent, as it is a clear variation from the user's normal pattern of use of the payment device.

While the embodiments described in detail above relate primarily to payment devices, embodiments of the invention may be provided in other contexts. The scope of the invention is defined by the spirit and scope of the claims and is not limited by the embodiments described here.

## Claims

1. A method of authentication of a user at a computing device for a remote service, comprising at the computing device:
providing a plurality of authentication options to the user;
on selection of an authentication option by the user, performing an authentication protocol for the selected authentication option; and
on successful performance of the authentication protocol, communicating with the remote service to provide a confirmation of successful authentication for the remote service with an identification of which of the plurality of authentication options was selected by the user.

2. The method as claimed in claim 1, wherein the computing device is a wireless telecommunications handset.

3. The method as claimed in claim 1 or claim 2, wherein the authentication options comprise at least one biometric identifier.

4. The method as claimed in any preceding claim, wherein the authentication options comprise at least one authentication option for a delegated user.

5. The method as claimed in any preceding claim, wherein the computing device is a payment device.

6. The method as claimed in claim 5, wherein the remote service comprises an issuer authentication service for the payment device.

7. The method as claimed in claim 6, wherein the payment device uses an EMV protocol, and wherein the authentication option selected is communicated in Issuer Application Data.

8. The method as claimed in claim 7, wherein the authentication option selected is communicated within the PIN Try Counter.

9. A computing device having a processor and a memory and programmed to perform the method of any preceding claim, and having a user interface for a user to provide one or more authentication options.

10. A method of fraud detection comprising:
providing multiple authentication options for a user of a device or service;
tracking use of the separate authentication options for that user to establish an authentication pattern for that user; and
identifying a use of an authentication option as potentially fraudulent if the use does not match the authentication pattern.
